# EUROPÄISCHE PATENTSCHRIFT

(11) **EP 1 391 362 B1**
(45) Veröffentlichungstag und Bekanntmachung des Hinweises auf die Patenterteilung: **04.10.2006**
(21) Anmeldenummer: 03090186.2
(22) Anmeldetag: 20.06.2003
(51) Int. Cl.: B60T 8/88

(54) **Elektronisches Steuergerät einer elektrischen Parkbremse in einem Kraftfahrzeug**
Electronic control unit of an electric parking brake in a motor vehicle
Dispositif de commande électronique d'un frein de stationnement électrique dans un véhicule automobile

(30) Priorität: 21.08.2002 DE 10239025
(43) Veröffentlichungstag der Anmeldung: 25.02.2004
(73) Patentinhaber: Volkswagen AG, 38436 Wolfsburg (DE)
(72) Erfinder: Spichalsky, Carsten, 38165 Lehre (DE); Ruchatz, Thomas, 38165 Lehre (DE)
(74) Vertreter: Effert, Bressel und Kollegen

(56) Entgegenhaltungen:
- DE-A- 19 814 657
- DE-A- 19 836 687
- DE-C- 4 111 918
- US-A- 6 151 541

## Beschreibung

Die Erfindung betrifft ein elektronisches Steuergerät in einem Kraftfahrzeug und ein Verfahren zur Ansteuerung.

In modernen Kraftfahrzeugen nimmt die Anzahl der eingesetzten Steuergeräte stetig zu. Die Steuergeräte erhalten ihre notwendigen Daten entweder von anderen Steuergeräten und/oder direkt von Sensoren, wobei die Kommunikation zwischen den Steuergeräten vorzugsweise über ein Bussystem, wie beispielsweise ein CAN-Bus, erfolgt. Vorzugsweise erfolgt eine Unterteilung des Bussystems, sodass die Komfortkomponenten und die sicherheitsrelevanten Komponenten in unterschiedlichen Bussystemen angeordnet sind, wobei diese dann gegebenenfalls über ein Gateway miteinander Daten austauschen können. Beispiele für sicherheitsrelevante Steuergeräte sind beispielsweise das Motorsteuergerät, ein Antiblockiersystem-Steuergerät oder ein elektrisches Park- bzw. Feststellbremsen-Steuergerät.

Aus der DE 199 62 556 A1 ist eine elektrische Feststellbremse eines Fahrzeuges mit zugehörigem Steuergerät bekannt. Die Funktion der Feststellbremse ist folgende: Durch das Steuergerät wird bei einem nicht stillstehenden Fahrzeug (V > 0 km/h) eine dynamische Abbremsung durch Aufbau eines geeigneten Zuspanngradienten oder Ansteuern der Betriebsbremse zur Erzeugung eines Zuspanngradienten erzielt, wohingegen bei einem stillstehenden Fahrzeug (V = 0 km/h) eine statische Abbremsung durch Zuspannen der Feststellbremse mit höherem Zuspanngradienten erfolgt. Zur eindeutigen Zustandserkennung wird das Geschwindigkeitssignal im Übergangsbereich der auflösbaren Raddrehzahl auf V = 0 km/h extrapoliert. Der Übergang zwischen einem nicht stillstehenden und einem stillstehenden Fahrzeug erfolgt fließend, so dass keine Lücke entsteht.

Eine automatische Funktion der Vorrichtung kann dadurch vorgesehen sein, dass bei einem Stillstand des Fahrzeuges und dann, wenn der Fahrer das Fahrzeug verlässt, ein automatisches Zuspannen erfolgt. Darüber hinaus können Neigungswinkelsignale zu einem automatischen Zuspannen der Feststellbremse herangezogen werden. In diesem Falle wird ein Wegrollen des Fahrzeuges am Berg verhindert.

Ferner kann die Vorrichtung gekoppelt sein mit einem elektromechanisch schaltbaren Getriebe. In diesem Falle erfolgt ein Zuspannen, wenn der Wählhebel des Getriebes in eine Parkstellung gestellt wird. Ein automatisches Lösen erfolgt bei Verlassen des Wählhebels aus der Parkstellung. Eine Rückrollverhinderungsfunktion kann dadurch realisiert werden, dass beim Anfahren am Berg, abhängig vom Neigungswinkelsignal und von der Motormomentenschnittstelle ein automatisches Zuspannen und Lösen der Feststellbremse erfolgt. Außerdem lässt sich auch eine Abschleppschutzfunktion in Verbindung mit einer elektronischen Wegfahrsperre durch selbsttätiges Zuspannen der Feststellbremse realisieren.

Zur Realisierung einer teil- oder vollautomatischen Funktion der Vorrichtung ist vorgesehen, dass sie mit einer fremdkraftbetätigten Betriebsbremse so gekoppelt ist, dass bei "Zuspannen" bei einer eingeschalteten Zündschlüsselposition und einer Geschwindigkeit des Fahrzeuges V > 0 km/h bei gleichzeitiger Anzeige der Betätigung eine Ansteuerung der Betriebsbremse erfolgt, mit der das Fahrzeug, wenn erforderlich, mit Hilfe aller an sich bekannter stabilisierender Bremsregelsysteme abgebremst wird und eine unterlagerte Ansteuerung "Zuspannen" der Parkbremse bei Erreichen eines Geschwindigkeitswertes V = 0 km/h oder nach einer zu definierenden Zeit erfolgt. Eine derartige Systemverknüpfung ist dadurch gekennzeichnet, dass in einem vorgebbaren Zeitintervall durch Erkennung der Zustände "Fahrer verlässt das Fahrzeug", "Störung Betriebsbremse" und "Motor aus" eine unmittelbare Funktion "Zuspannen" bei gleichzeitiger Anzeige an der Betätigungseinrichtung selbst erfolgt.

Darüber hinaus kann zur Realisierung einer teil- oder vollautomatischen Funktion der Vorrichtung vorgesehen sein, dass sie mit einer direkten oder indirekten, über Hilfsgrößen bestimmten Motormomentenschnittstelle und einem Neigungswinkelsignal so gekoppelt ist, dass die Funktion "Lösen" beim Anfahren aus einem Zustand, bei der der Zündschlüssel in einer Schaltstellung ist und die Geschwindigkeit V = 0 km/h ist, zusätzlich zu einem mechanischen Taster "Lösen" auch durch ein Betätigen eines Pedalwertgebers (z.B. Betätigen eines E-Gases) möglich ist, wobei die Rückmeldung durch die Deaktivierung einer Funktionsleuchte geschieht. Eine solche Funktion dient insbesondere zur Realisierung einer Anfahrhilfe am Berg.

Ferner ist die Funktion "Lösen" in einem Zustand, bei der der Zündschlüssel in einer Schaltstellung ist und die Geschwindigkeit größer als 0 km/h ist, zusätzlich zu einem mechanischen Taster "Lösen" auch eine Betätigung des Pedalwertgebers (z.B. E-Gas) möglich. Ein solches Lösen tritt beispielsweise ein, wenn der Fahrer eine Notbremssituation, in der er die Feststellbremse zur Durchführung einer Notbremsung verwendet hat, beenden will. In beiden Fällen muss der Taster nicht betätigt werden, sondern es erfolgt ein Lösen der Feststellbremse durch Betätigen des Pedalwertgebers, beispielsweise durch Betätigen eines E-Gaspedals. Darüber hinaus ist eine Kombination mit einer Einparkhilfe denkbar, wobei bei Erfassung eines Hindernisses mittels an sich bekannter Sensoren eine Ansteuerung der Betriebsbremse erfolgt und die Feststellbremse daraufhin nach einer bestimmten vorgebbaren Zeit aktiviert wird, wenn der Fahrer das Fahrzeug verlässt oder den Motor abschaltet. Dabei wird vorgeschlagen, dass das Steuergerät der Feststellbremse mit dem Bedienelement über einen CAN-Bus oder über einen CAN-Datenbus unabhängige Leitung erfolgt.

Aus der DE 198 36 687 A1 ist eine elektronische Feststellbremsanlage für Kraftfahrzeuge bekannt, mit einer Bremsbedienungseinrichtung und einer elektronischen Steuereinrichtung zur Umwandlung von Eingangssignalen in entsprechende Ausgangssignale, die zur Ansteuerung einer Aktuatoreinrichtung vorgesehen sind, wobei die Eingangssignale den Betriebszustand der Bremsbedienungseinrichtung und den Betriebszustand der Betriebsbremsanlage aufweisen, wobei die Eingangssignale ferner die Fahrzeuggeschwindigkeit aufweisen.

Aus der DE 198 14 657 A1 ist eine Steuer- und/oder Regelvorrichtung für eine elektrische Feststellbremseinrichtung von Fahrzeugen bekannt, mit einer Steuereinrichtung für die Ansteuerung wenigstens einer Stelleinheit zum Einwirken auf wenigstens eine Feststellbremseinheit, wobei die Steuereinrichtung in Art eines Master-Slave-Systems ausgebildet ist, wobei die Master-Einheit als zentrale Steuereinheit ausgeführt ist und für die Steuerung der Hauptfunktionen, wie beispielsweise Feststellen und Lösen der Feststellbremseinheit, sowie zur Funktionsüberwachung der Slave-Einheit des Master-Slave-Systems dient, wobei die Slave-Einheit neben der Erfassung von Regelgrößen für Zusatzfunktionen und der Weiterleitung dieser Regelgrößen an die Master-Einheit zusätzlich als ein Redundanzsystem für die Master-Einheit ausgebildet ist. Die Master-Einheit weist auch eine Verbindung zu einer Sensoreinheit zum Messen der Neigung der Hanglage des Fahrzeuges auf. Dieser Neigungssensor dient der Master-Einheit als Sollwertgeber für die Steuerung der einzustellenden Bremskraft der Feststellbremse, wodurch die Bremskraft lastabhängig eingestellt werden kann.

Aus der DE 41 11 918 C1 ist eine Einrichtung zur Steuerung von Stellgliedern mit einem elektronischen Steuergerät bekannt, in dem eine Überwachungsschaltung enthalten ist, die mit einem Mikroprozessorausgang verbunden ist und bei Ablauf des Steuerprogramms regelmäßig Steuersignale abgibt, deren Ausbleiben eine Watchdoglogik und gegebenenfalls einen Notlaufpfad, über den die Einrichtung mit beschränkter Funktion betrieben werden kann, aktiviert, wobei ein vom Mikroprozessor regelmäßig erzeugtes Signal eine Interuptroutine startet, mit der aus einem ersten Speicher fortlaufend unterschiedliche Muster M1 und M2, die aus einem redundanten Code aufgebaut sind, ausgelesen, der Überwachungsschaltung bereitgestellt, in dieser gespeichert und zu Werten Y1 und Y2 berechnet werden, die ebenfalls in einem zweiten Speicher gespeichert werden. Der Wert Y1 wird an einen Vergleicher ausgegeben und der Wert Y2 vom Mikroprozessor gelesen und in diesem zu einem Wert Z berechnet, der der Überwachungsschaltung zugeführt wird, in dieser in einem dritten Speicher gespeichert und dem Vergleicher zugeführt wird. Bei einer Übereinstimmung von Z = Y1 gibt der Vergleicher ein Steuersignal an die Watchdoglogik ab, wobei der Notlaufpfad erst nach einer definierten Anzahl von Resetimpulsen der Watchdoglogik insgesamt oder innerhalb einer definierten Zeitspanne aktiviert wird.

Aus der US-6,151,541 ist ein Steuergerät für ein Kraftfahrzeug bekannt, wobei während des regulären Betriebes bei eingeschalteter Zündung erzeugte Daten in einem flüchtigen Speicher abgespeichert werden. Das Steuergerät umfasst Mittel, mittels derer die Zündschlüsselstellung erfassbar ist, wobei beim Abschalten der Zündung Daten aus dem flüchtigen Speicher in einen nicht-flüchtigen Speicher umgespeichert werden. Bei Wiedereinschaltung der Zündung werden dann die Daten aus dem nicht-flüchtigen Speicher in einen Back-up-Bereich des flüchtigen Speichers geschrieben und stehen dem Steuergerät wieder zur Verfügung.

Aus der DE 100 29 401 A1 ist ein Verfahren zum ereignisbedingten Abspeichern von Fahrzeugsystemdaten eines Fahrzeugsystems bekannt, mit Zwischenspeichern der an mindestens einem Fahrzeugsystembus anliegenden Fahrzeugsystem-Busdaten in einem Zwischenspeicher einer Aufzeichnungseinheit, wobei die Fahrzeugsystem-Busdaten Fahrzeug-Bewegungsdaten und Steuergerät-Befehlsdaten enthalten, die von den Steuergeräten des Fahrzeugsystems an Stellglieder abgegeben werden. Dabei wird mindestens ein Abspeicherbefehl durch ein auslösendes Steuergerät des Fahrzeugsystems erzeugt, wenn mindestens ein Abspeicherereignis durch das auslösende Steuergerät erfasst wird, wobei der erzeugte Abspeicherbefehl eine Fahrzeugsystem-Busdatenliste der abzuspeichernden Fahrzeugsystem-Busdaten enthält. Der erzeugte Abspeicherbefehl wird dann von dem auslösenden Steuergerät an die Aufzeichnungseinheit übertragen. In einem Auslesespeicher der Aufzeichnungseinheit werden dann in der Fahrzeugsystem-Busdatenliste des übertragenen Abspeicherbefehls angegebene Fahrzeugsystem-Busdaten abgespeichert.

Der Erfindung liegt das technische Problem zugrunde, ein elektronisches Steuergerät, das Bestandteil einer elektrischen Park- bzw. Feststellbremse ist, in einem Kraftfahrzeug zu schaffen sowie ein Verfahren zu dessen Ansteuerung zur Verfügung zu stellen, mittels derer die Funktionssicherheit des Steuergerätes erhöht werden kann.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu ist dem elektronischen Steuergerät ein Speicherelement zugeordnet, in dem mindestens ein dem Steuergerät zugeführtes Datum temporär zwischenspeicherbar ist, wobei bei Ausfall der Datenübertragung der Speicherinhalt dem Steuergerät zuführbar ist und in Abhängigkeit der Daten aus dem Speicherelement eine Notlaufstrategie durchführbar ist. Somit wird durch einfache Maßnahmen eine Rückfallebene für das Steuergerät gebildet, um bei Ausfall bzw. beim Abschalten der Datenübertragung mittels des Steuergerätes ein Nachlaufen zur Durchführung einer Notlaufstrategie zu gewährleisten. Dabei müssen nicht zwangsläufig alle dem Steuergerät üblicherweise zugeführten Daten zwischengespeichert werden, sondern nur die, deren Kenntnis zur Durchführung der Notlaufstrategie zwingend sind.

Vorzugsweise wird die jeweils gültige Geschwindigkeit des Kraftfahrzeuges als Datum im Speicherelement abgespeichert, da, wie zum Stand der Technik erläutert, je nach Geschwindigkeit das Zuspannen der Feststellbremse unterschiedlich ist. Dabei wird weiter vorzugsweise allgemein nicht nur das letzte aktuelle Datum zwischengespeichert, sondern eine ganze Reihe, sodass der aktuelle Wert beim Ausfall der Datenübertragung extrapoliert werden kann, beispielsweise der Verlauf der Geschwindigkeit, sodass beispielsweise eine steigende oder fallende Tendenz erkennbar ist.

In einer weiteren bevorzugten Ausführungsform ist dem Steuergerät eine Notspannungsversorgung oder eine Notbatterie zugeordnet, sodass auch bei Ausfall der Energieversorgung zumindest die Notlaufstrategie noch durchführbar ist. Anstelle der Notbatterie kann diese Nachlaufenergieversorgung auch als Kondensator, insbesondere als Mehrschichtkondensator, ausgebildet sein.

In einer weiteren bevorzugten Ausführungsform ist das Speicherelement als Ringspeicher oder als Schieberegister ausgebildet.

In einer weiteren bevorzugten Ausführungsform ist dem Steuergerät ein Neigungssensor zugeordnet, mittels dessen beispielsweise der endgültige Fahrzeugstillstand erkannt werden kann.

Die Erfindung wird nachfolgend anhand eines bevorzugten Ausführungsbeispieles näher erläutert. Die einzige Figur zeigt ein schematisches Blockschaltbild eines Steuergerätes in einem Bussystem.

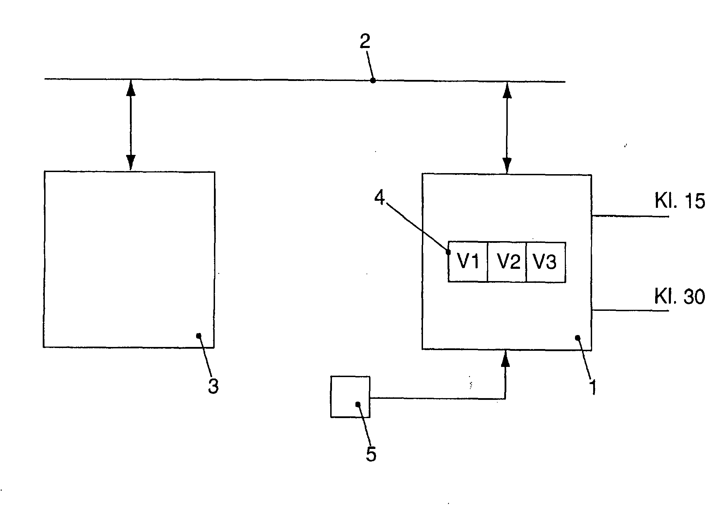

In der Fig. 1 ist ein Steuergerät 1 für eine Park- bzw. Feststellbremse dargestellt, das über ein CAN-Antrieb-Bussystem 2 mit weiteren Steuergeräten 3 verbunden ist, wobei beispielsweise ein Steuergerät 3 als elektronisches Steuergerät für die Fahrdynamikregelung ausgebildet ist. Des weiteren ist das Steuergerät 1 mit einem Speicherelement 4 ausgebildet und direkt mit einem Neigungssensor 5 verbunden. Zusätzlich umfasst das Steuergerät 1 Eingänge für KL 15 (Zündung ein/aus) und KL 30, über die das Steuergerät 1 mit der Bordnetzbatterie verbunden ist und mit elektrischer Energie versorgt wird. In dem Speicherelement 4 werden die letzten aktuellen Geschwindigkeiten V1 - V3, die von dem Steuergerät 3 an das Steuergerät 1 über das CAN-Antrieb-Bussystem 2 übertragen. Fällt nun das CAN-Antrieb-Bussystem 2 aus oder wird die Zündung ausgeschaltet, so erhält das Steuergerät 1 keine Daten mehr vom Steuergerät 3. In diesem Fall liest das Steuergerät 1 die Daten V1 - V3 aus dem Speicherelement 4 aus und extrapoliert aus diesen die aktuelle Geschwindigkeit. Wird dabei beispielsweise eine sehr geringe Geschwindigkeit V erfasst, die gegen Null geht, so kann daraus gefolgert werden, dass der Kraftfahrzeugführer beispielsweise die Zündung ausgeschaltet hat und in seine Garage rollt. In diesem Fall kann die Feststellbremse stark zugespannt werden. Mittels des Neigungssensors 5 kann dann der endgültige Fahrzeugstillstand erfasst werden und das Steuergerät 1 kann sich abschalten. Ergibt hingegen die Auswertung der Daten des Speicherelementes 4 eine relativ hohe Geschwindigkeit, so ist ein Ausfall vom CAN-Antrieb im Fahrbetrieb wahrscheinlich. In diesem Fall kann von diesem Ausfall auch die Betriebsbremse umfasst sein. In diesem Fall besteht die Notlaufstrategie des Steuergerätes 1 in einer Bremsunterstützung bzw. einer Notbremsung und das Steuergerät 1 erzeugt ein Steuersignal für einen geeigneten Zuspannungsradienten in Abhängigkeit von der extrapolierten Geschwindigkeit. Auch in diesem Fall kann mittels des Neigungssensors 5 der endgültige Fahrzeugstillstand erfasst werden und das Steuergerät 1 kann sich abschalten.

## Patentansprüche

1. Elektronisches Steuergerät in einem Kraftfahrzeug, das Bestandteil einer elektrischen Parkbremse ist, dem Daten von anderen Steuergeräten und/oder Sensoren zuführbar sind, wobei
dem elektronischen Steuergerät (1) ein Speicherelement (4) zugeordnet ist **dadurch gekennzeichnet, dass** diesem Speicherelement (4) in mindestens ein dem Steuergerät (1) zugeführtes Datum temporär zwischenspeicherbar ist, wobei bei Ausfall der Datenübertragung der Speicherinhalt dem Steuergerät (1) zuführbar ist und in Abhängigkeit der Daten eine Notlaufstrategie des Steuergerätes (1) durchführbar ist.

2. Elektronisches Steuergerät nach Anspruch 1, **dadurch gekennzeichnet, dass** mindestens die Kraftfahrzeug-Geschwindigkeit (V1 - V3) als Datum im Speicherelement (4) zwischenspeicherbar ist.

3. Elektronisches Steuergerät nach einem der vorangegangenen Ansprüche, **dadurch gekennzeichnet, dass** dem Steuergerät (1) eine Notbatterie oder Notspannungsversorgung zugeordnet ist.

4. Elektronisches Steuergerät nach einem der vorangegangenen Ansprüche, **dadurch gekennzeichnet, dass** das Speicherelement (4) als Ringspeicher oder als Schieberegister ausgebildet ist.

5. Elektronisches Steuergerät nach einem der vorangegangenen Ansprüche, **dadurch gekennzeichnet, dass** dem Steuergerät (1) ein Neigungssensor (5) zugeordnet ist.

6. Verfahren zur Ansteuerung eines elektronischen Steuergerätes (1), das Bestandteil einer elektrischen Parkbremse ist, dem Daten von anderen Steuergeräten (3) und/oder Sensoren zugeführt werden, mittels eines zugeordneten Speicherelementes (4), **dadurch gekennzeichnet, dass** in diesem Speicherelement (4) mindestens ein dem Steuergerät (1) zugeführtes Datum temporär zwischengespeichert wird, wobei das Steuergerät (1) bei Ausfall der Datenübertragung auf die Daten im Speicherelement (4) zugreift und in Abhängigkeit der Daten eine Notlaufstrategie durchführt.

## Claims

1. Electronic controller in a motor vehicle, which electronic controller is a constituent part of an electric parking brake and can be supplied with data from other controllers and/or sensors, with the electronic controller (1) having an associated memory element (4), **characterized in that** at least one item of data which is supplied to the controller (1) is temporarily buffer-stored in this memory element (4), it being possible, in the event of failure in data transmission, to supply the memory contents to the controller (1) and to carry out an emergency strategy of the controller (1) as a function of the data.

2. Electronic controller according to Claim 1, **characterized in that** at least the motor-vehicle speed (V1-V3) can be buffer-stored in the memory element (4) as an item of data.

3. Electronic controller according to either of the preceding claims, **characterized in that** the controller (1) has an associated emergency battery or an emergency power supply means.

4. Electronic controller according to one of the preceding claims, **characterized in that** the memory element (4) is in the form of a ring memory or a shift register.

5. Electronic controller according to one of the preceding claims, **characterized in that** the controller (1) has an associated inclination sensor (5).

6. Method for actuating an electronic controller (1), which is a constituent part of an electric parking brake and can be supplied with data from other controllers (3) and/or sensors by means of an associated memory element (4), **characterized in that** at least one item of data which is supplied to the controller (1) is temporarily buffer-stored in this memory element (4), with the controller (1), in the event of failure in data transmission, accessing the data in the memory element (4) and carrying out an emergency strategy as a function of the data.

## Revendications

1. Dispositif de commande électronique dans un véhicule automobile, qui fait partie d'un frein de stationnement électrique, auquel des données d'autres appareils de commande et/ou de capteurs peuvent être acheminées,
un élément de mémoire (4) étant associé au dispositif de commande électronique (1), **caractérisé en ce que** au moins une donnée acheminée au dispositif de commande (1) peut être mémorisée temporairement dans cet élément de mémoire (4), le contenu de la mémoire, en cas de panne de la transmission des données, pouvant être acheminé au dispositif de commande (1) et, en fonction des données, une stratégie de fonctionnement secours du dispositif de commande (1) pouvant être mise en oeuvre.

2. Dispositif de commande électronique selon la revendication 1, **caractérisé en ce qu'**au moins la vitesse du véhicule (V1-V3) peut être mémorisée temporairement sous forme de donnée dans l'élément de mémoire (4).

3. Dispositif de commande électronique selon l'une quelconque des revendications précédentes, **caractérisé en ce qu'**une pile de secours ou une alimentation de secours est associée au dispositif de commande (1).

4. Dispositif de commande électronique selon l'une quelconque des revendications précédentes, **caractérisé en ce que** l'élément de mémoire (4) est réalisé sous la forme d'une mémoire cyclique ou d'un registre à décalage.

5. Dispositif de commande électronique selon l'une quelconque des revendications précédentes, **caractérisé en ce que** l'on associe un capteur d'inclinaison (5) au dispositif de commande (1).

6. Procédé de commande d'un dispositif de commande électronique (1), qui fait partie d'un frein de stationnement électrique, auquel sont acheminées des données d'autres dispositifs de commande (3) et/ou de capteurs, au moyen d'un élément de mémoire associé (4), **caractérisé en ce que** au moins une donnée acheminée au dispositif de commande (1) est mémorisée temporairement dans cet élément de mémoire (4), le dispositif de commande (1), en cas de panne de la transmission des données, ayant accès aux données dans l'élément de mémoire (4) et effectuant en fonction des données une stratégie de fonctionnement de secours.
